# EUROPÄISCHE PATENTANMELDUNG

(11) **EP 0 755 747 A1**
(43) Veröffentlichungstag der Anmeldung: **29.01.1997**
(21) Anmeldenummer: 96111222.4
(22) Anmeldetag: 12.07.1996
(51) Int. Cl.: B23P 11/00, B21K 25/00, F16F 9/02

(54) **Verfahren zum Anbringen einer Ringscheibe an einer Kolbenstange und Werkzeug zur Durchführung dieses Verfahrens**

(30) Priorität: 25.07.1995 DE 19527113
(71) Anmelder: SUSPA COMPART Aktiengesellschaft, D-90518 Altdorf (DE)
(72) Erfinder: Bauer, Hans-Peter, 90518 Altdorf (DE); Költsch, Erwin, 90518 Altdorf (DE)
(74) Vertreter: Rau, Manfred, Dr. Dipl.-Ing.

(57) **Zusammenfassung**

Eine Ringscheibe (32') wird an einer Kolbenstange (3) durch radial zur Mittel-Längs-Achse (2) aufgebrachte Kräfte derart verformt, daß sie in eine an der Kolbenstange (3) ausgebildete Vertiefung (34) verformt wird. Hierdurch werden beispielsweise Teile eines Kolbens an der Kolbenstange (3) montiert.

## Beschreibung

Die Erfindung betrifft ein Verfahren zum Anbringen einer Ringscheibe an einer Kolbenstange und ein Werkzeug zur Durchführung dieses Verfahrens.

Insbesondere das Anbringen von Kolben an Kolbenstangen für Gasfedern, hydraulische oder pneumatische Dämpfer oder andere fluidgefüllte Kolben-Zylinder-Einheiten ist mit beträchtlichem Aufwand verbunden, da ein zur Aufnahme des in der Regel mehrteiligen Kolbens dienender verjüngter Abschnitt an die Kolbenstange angedreht werden muß. Alternativ wird eine Ringnut in die Kolbenstange eingedreht und ein Sicherungsring eingesetzt, was ebenfalls mit einigem Aufwand verbunden ist.

Der Erfindung liegt die Aufgabe zugrunde, eine Ringscheibe an einer Kolbenstange festzulegen.

Diese Aufgabe wird erfindungsgemäß bei dem Verfahren nach dem Gattungsbegriff des Anspruches 1 durch die Merkmale im Kennzeichnungsteil des Anspruches 1 gelöst. Zur Durchführung dieses Verfahrens wird erfindungsgemäß ein Werkzeug mit den Merkmalen im Kennzeichnungsteil des Anspruches 8 eingesetzt. Die Vertiefung in der Kolbenstange wird normalerweise durch eine in einfacher Weise einzustechende Ringnut gebildet. Die durch Kaltverformung, wie z.B. Fließpressen, in die Vertiefung hineinverformte Ringscheibe ist außerordentlich fest mit der Kolbenstange verbunden. Die Ringscheibe kann die Funktion eines Anschlags für einen Kolben od.dgl. haben, also die Funktion eines Sicherungsrings übernehmen; sie kann gleichzeitig aber auch Teil eines mehrteiligen Kolbens sein. Ihre Auszugfestigkeit ist erheblich größer als die eines Sicherungsrings.

Zahlreiche vorteilhafte Ausgestaltungen ergeben sich aus den Unteransprüchen.

Die Erfindung wird nachfolgend anhand der Zeichnung näher erläutert. Es zeigt
- Fig. 1: eine Gasfeder im Längsschnitt,
- Fig. 2: einen Teil der Kolbenstange und den Kolben der Gasfeder im Längsschnitt in gegenüber Fig. 1 vergrößertem Maßstab,
- Fig. 3: ein Werkzeug zur Befestigung einer Ringscheibe an der Kolbenstange durch Kaltverformung,
- Fig. 4: das Einformen einer Radialnut in die Ringscheibe und
- Fig. 5: eine gegenüber Fig. 2 abgewandelte Ausführungsform.

Die in der Zeichnung dargestellte Gasfeder weist ein im wesentlichen aus einem zylindrischen Rohr bestehendes Gehäuse 1 mit einer Mittel-Längs-Achse 2 und einer koaxial zur Achse 2 angeordneten im Gehäuse 1 verschiebbaren Kolbenstange 3 auf. Die Kolbenstange 3 ist an einem Ende 4 des Gehäuses 1 aus diesem herausgeführt. Am anderen Ende 5 ist das Gehäuse 1 gasdicht verschlossen.

An ihrem im Gehäuse 1 befindlichen Ende ist die Kolbenstange 3 mit einem Kolben 6 versehen, der an der Innenwand 7 des Gehäuses 1 geführt ist. Der Kolben 6 ist in üblicher Weise als sogenannter Dämpfungskolben ausgebildet, und zwar mit unterschiedlicher Dämpfungscharakteristik für das Einschieben der Kolbenstange 3 in das Gehäuse 1 bzw. für das Ausfahren der Kolbenstange 3 aus dem Gehäuse 1.

Die Kolbenstange 3 ist am Ende 4 des Gehäuses 1 in einer Führung abgedichtet geführt. Die Führung selber besteht aus zwei Teilen, nämlich einer Anschlag- und Distanz-Hülse 8 mit einem Führungsabschnitt 9 für die Kolbenstange 3 und aus einem Führungs-Ring 10. Die Hülse 8 ist dem Kolben 6 zugewandt, wobei auch der Führungsabschnitt 9 dem Kolben 6 zugewandt ist. Der Führungs-Ring 10 ist dem Ende 4 des Gehäuses 1 zugewandt. Zwischen der Hülse 8 und dem Ring 10 ist eine Dichtung 11 angeordnet, die mit einem Außen-Dichtungsring 12 gegen die Innenwand 7 des Gehäuses 1 dichtend anliegt. Sie weist weiterhin einen einstückig mit dem Außen-Dichtungsring 12 ausgebildeten Innen-Dichtungsring 13 auf, der dichtend gegen die Kolbenstange 3 anliegt. Dieser Innen-Dichtungsring 13 kann mit an der Kolbenstange 3 anliegenden Dichtungslippen ausgebildet sein, die verhältnismäßig empfindlich sind.

Die Hülse 8 weist eine Außen-Umfangsnut 14 auf, in die eine im Gehäuse 1 ausgebildete, zur Achse 2 hin vorspringende umlaufende Sicke 15 eingreift, wodurch die Anschlag- und Distanzhülse 8 mit dem Gehäuse 1 fest verbunden wird und wodurch ihre Lage in Richtung der Achse 2 relativ zum Gehäuse 1 definiert wird. Das Gehäuse 1 ist am Ende 4 mit einer den Führungs-Ring 10 umgreifenden Umbördelung 16 versehen, wodurch wiederum der Führungs-Ring 10 im Gehäuse 1 festgelegt wird. Durch das Einrollen der Sicke 15 einerseits und das Anbringen der Umbördelung 16 andererseits wird auch der Abstand des Führungs-Rings 10 von der Hülse 8 und damit die Vorspannung der Dichtung 11 in Richtung der Achse 2 zwischen dem Ring 10 und der Hülse 8 vorgegeben. Durch diese Vorspannung in Richtung der Achse 2 erfolgt eine Verspannung in radialer Richtung, d.h. durch diese Vorspannung in Richtung der Achse 2 wird auch die Anpreßkraft vorgegeben, mit der der Außen-Dichtungsring 11 gegen die Innenwand 7 und der Innen-Dichtungsring 13 gegen die Kolbenstange 3 anliegt.

In der Innenwand 7 des Gehäuses 1 ist ein durch eine Längssicke gebildeter Überström-Kanal 17 ausgebildet, durch den Druckgas am Kolben 6 vorbei aus dem zwischen dem Kolben 6 und dem verschlossenen Ende 5 begrenzten Gehäuseraum 18 in den zwischen dem Kolben 6 und der Führung begrenzten Gehäuseraum 19 und umgekehrt strömen kann. Das Gehäuse 1 ist teilweise oder vollständig mit Druckgas gefüllt.

Das Gehäuse 1 weist an seinem Ende 5 einen angeschweißten Ring 20 mit einem Gewindezapfen 21 auf, die beide konzentrisch zur Achse 2 angeordnet sind. Auf dem Gewindezapfen 21 ist eine Kugelpfanne 22 eines Winkelgelenks aufgeschraubt, die hierzu eine zylindrische Öffnung 23 mit einem entsprechenden Innengewinde 24 aufweist. Eine solche Kugelpfanne 22 kann selbstverständlich auch auf das am Ende der Kolbenstange 3 angebrachte Gewinde 25 aufgeschraubt werden.

Der Kolben 6 besteht aus einem im wesentlichen ringzylindrischen Kolben-Grundkörper 26, der im wesentlichen ohne Spiel auf der Kolbenstange 3 aufsitzt, die auch in diesem Endbereich 27 ihren durchgehenden Durchmesser d aufweist. Der Kolben-Grundkörper 26 liegt gegen einen gestauchten bzw. vernieteten tellerartigen Anschlag 28 der Kolbenstange 3 an. Der Kolben-Grundkörper 26 weist einen parallel zur Achse 2 verlaufenden Durchlaßkanal 29 auf, der zum Gehäuseraum 18 stets offen ist. An seinem dem Anschlag 28 abgewandten Ende mündet der Durchlaßkanal 29 in einer ringförmigen Umfangs-Ausnehmung 30 des Grundkörpers 26. Diese ist zu der dem Anschlag 28 abgewanden Stirnseite 31 des Grundkörpers 26 hin offen. Sie wird durch eine Ringscheibe 32 zum Gehäuseraum 19 hin weitgehend abgedeckt. In der Ausnehmung 30 ist ein als Dichtungsring dienender Kolbenring 33 angeordnet, der dicht an der Innenwand 7 des Gehäuses 1 anliegend geführt ist. Die Ringscheibe 32 und der Grundkörper 26 haben dagegen geringfügiges Führungsspiel gegenüber der Innenwand 7. Die Breite a des Kolbenrings 33 in Richtung der Achse 2 ist kleiner als die Weite b der Ausnehmung 30 in Richtung der Achse 2. Des weiteren ist der Innendurchmesser c des Kolbenrings 33 deutlich kleiner als der Innendurchmesser e der Ausnehmung 30.

Wenn die Kolbenstange 3 in das Gehäuse 1 hineingeschoben wird, dann legt sich der Kolbenring 33 dichtend gegen die Ringscheibe 32 mit der Konsequenz, daß Gas vom Gehäuseraum 18 in den Gehäuseraum 19 nur durch den Überström-Kanal 17 strömen kann. Die Gasfeder hat also eine hohe Einschubdämpfung.

Wenn dagegen die Kolbenstange 3 entlastet wird und aus dem Gehäuse 1 herausfährt, dann legt sich der Kolbenring 33 gegen den Grundkörper 26, so daß Gas aus dem Gehäuseraum 19 um die Ringscheibe 32 herum durch die Ausnehmung 30 und den Durchlaßkanal 29 in den Gehäuseraum 18 strömen kann. Die Ausschubdämpfung ist gegenüber der Einschubdämpfung deutlich reduziert. Durch entsprechende Gestaltung des Überström-Kanals 17 können diese Dämpfungsverhältnisse naturgemäß stark verändert werden.

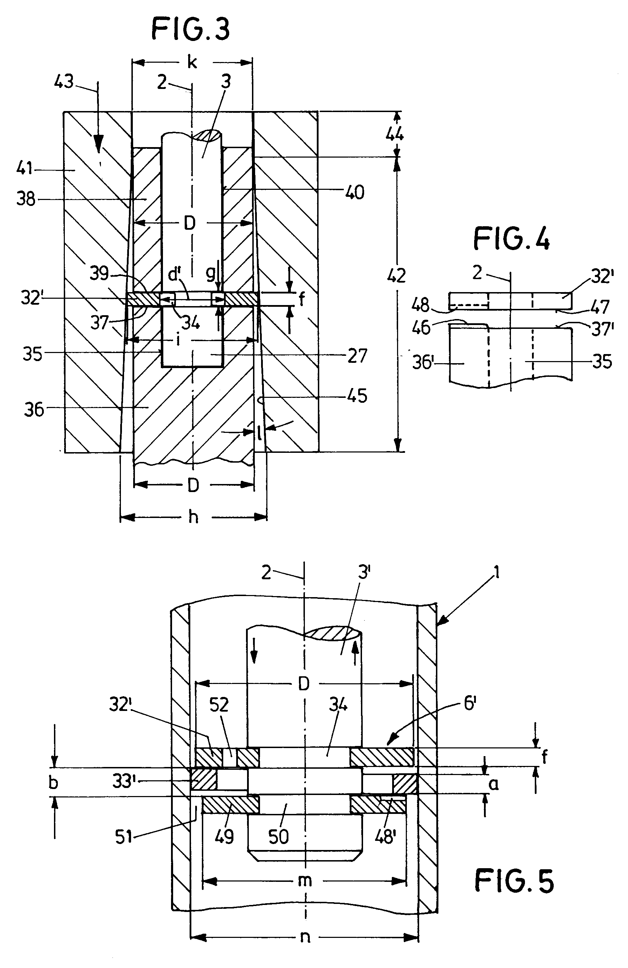

Die Ringscheibe 32 ist in einer in die Kolbenstange 3 eingestochenen Nut 34 festgelegt. Die Herstellung ergibt sich aus Fig. 3. Es wird eine Kolbenstange 3 eingesetzt, die bereits mit der eingestochenen Nut 34 versehen ist, an deren Endbereich 27 aber der tellerartige Anschlag 28 noch nicht angestaucht bzw. angenietet ist. Dieser Endbereich 27 wird in eine diesem im Querschnitt exakt angepaßte Aufnahme 35 eines Gegenhalters 36 eingeschoben. Dessen Stirnseite 37 endet bündig mit der Nut 34, die sich also genau an diese Stirnseite 37 anschließt. Nunmehr wird eine Ringscheibe 32' über die Kolbenstange 3 geschoben und liegt dann auf der Stirnseite 37 des Gegenhalters 36 auf. Diese Ringscheibe 32' weist einen Innendurchmesser d' auf, der nur um einige Hundertstel Millimeter größer ist als der Durchmesser d der Kolbenstange, so daß diese Ringscheibe 32' gerade auf die Kolbenstange 3 aufgeschoben werden kann. Die Dicke f dieser Ringscheibe 32' ist lediglich um einige Hundertstel Millimeter kleiner als die Breite g der Nut 34 in Richtung der Achse 2.

Anschließend wird ein Niederhalter 38, der einen ringzylindrischen Querschnitt aufweist, über die Kolbenstange 3 geschoben, so daß seine Stirnseite 39 gegen die Ringscheibe 32' zur Anlage kommt, und zwar gegenüber der Stirnseite 37 des Gegenhalters 36. Die Bohrung 40 des Niederhalters 38 ist dem Durchmesser d der Kolbenstange 3 angepaßt, so daß diese radial fest in dem Niederhalter 38 geführt ist. Der Gegenhalter 36 und der Niederhalter 38 haben identische Außendurchmesser D, die wiederum identisch sind dem zu erreichenden Außendurchmesser D der Ringscheibe 32'. Der Niederhalter 38 wird fest in der geschilderten Position gehalten, so daß er nicht ausweichen kann.

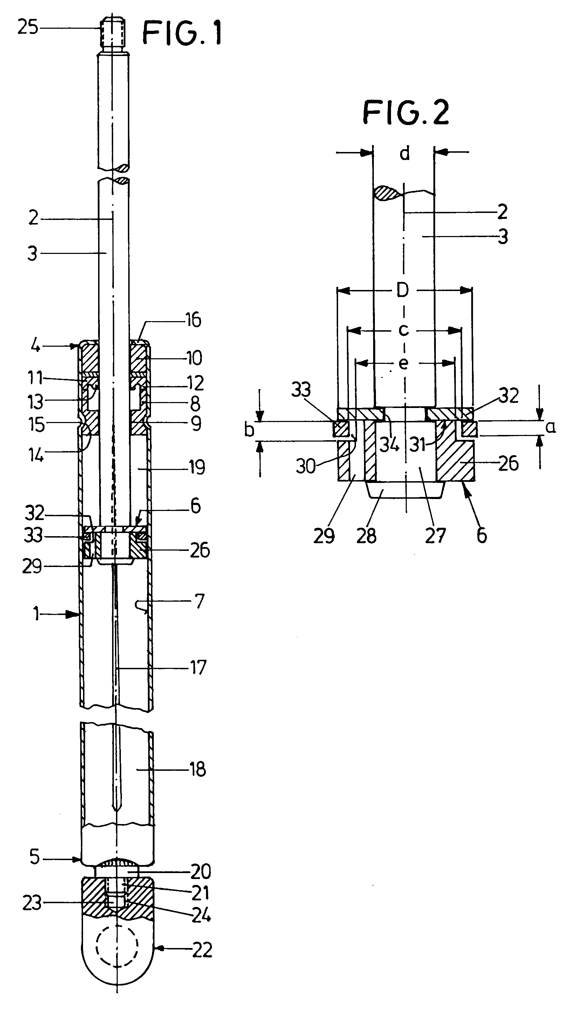

Anschließend wird eine Verformungs-Hülse 41 über die Einheit aus Gegenhalter 36, Kolbenstange 3, Ringscheibe 32' und Niederhalter 38 gezogen. Diese Verformungs-Hülse 41 weist einen kegelstumpfförmigen VerformungsAbschnitt 42 auf, dessen größter Innendurchmesser h größer ist als der Außendurchmesser i der Ringscheibe 32' und dessen kleinster Durchmesser k nur um einige Hundertstel Millimeter großer ist als der Außendurchmesser D der Gegenhalter 36 und Niederhalter 38. Bezogen auf die Ziehrichtung 43 schließt sich an den Verformungs-Abschnitt 42 ein zylindrischer Glätt-Abschnitt 44 an, dessen Durchmesser ebenfalls k ist. Der Öffnungswinkel l der Wand 45 des Verformungs-Abschnitts 42 liegt im Bereich zwischen 1° und 3°, bevorzugt im Bereich von 2°. Wenn die VerformungsHülse 41 in Ziehrichtung 43 über die Einheit aus dem Gegenhalter 36 und dem Niederhalter 38, der Kolbenstange 3 und der Ringscheibe 32' gezogen wird, dann wird letztere von der Wand 45 der Verformungs-Hülse 41 radial mit hohen Verformungskräften beaufschlagt. Die Ringscheibe 32 fließt also in die Ring-Nut 34. Sie kann in Richtung der Achse 2 nicht ausweichen, weil sie von den Stirnseiten 37, 39 des Gegenhalters 36 und des Niederhalters 38 gehalten wird. Wenn die Verformungs-Hülse 41 auch noch mit ihrem Glätt-Abschnitt 44 über die Ringscheibe 32 gezogen ist, hat diese genau die in Fig. 2 dargestellte Form und ist fest und rundum gasdicht anliegend in der Nut 34 aufgenommen. Das Volumen der Ringscheibe 32' ist naturgemäß exakt so zu wählen, daß es identisch dem Volumen der gewünschten Ringscheibe 32 entspricht. Als Material für die Ringscheibe 32' wird ein Stahl mit guten Kaltverformungseigenschaften gewählt.

In Fig. 4 ist ein Gegenhalter 36' angedeutet, der an seiner Stirnseite 37' mit einer schmalen, sich nur über einen kleinen Teil des Umfangs erstreckenden Erhöhung 46 versehen ist. Wenn eine Ringscheibe 32' gegen diesen Gegenhalter 36' angelegt und von dem Niederhalter 38 mit der entsprechenden Kraft in der geschilderten Weise beaufschlagt wird, dann wird durch die Erhöhung 46 in der zugeordneten Stirnfläche 47 der Ringscheibe 32' eine Radialnut 48 erzeugt. Ansonsten erfolgt die Befestigung dieser Ringscheibe 32' mit der Radialnut 48 an einer Kolbenstange 3 in der geschilderten Weise. Eine solche Radialnut 48 ist dann auch an der fertig montierten verformten Ringscheibe 32 vorhanden.

Im Anschluß an die Montage der Ringscheibe 32 an der Kolbenstange 3 wird der Grundkörper 26 zusammen mit dem Kolbenring 33 auf den Endbereich 27 aufgeschoben und der Anschlag 28 angeformt.

Wenn eine Ringscheibe 32 mit der Radialnut 48 vorhanden ist, dann ist hier auch beim Einschieben der Kolbenstange 3 in das Gehäuse 1 ein Gasdurchlaß vorhanden, durch den Gas vom Gehäuseraum 18, durch den Durchlaßkanal 29 und durch diese den Kolbenring 33 überbrückende Radialnut 48 in den Gehäuseraum 19 strömen kann, wobei die Strömung durch einen schmalen Ringspalt zwischen der Ringscheibe 32 und der Innenwand 7 des Gehäuses 1 vor sich geht. Die Radialnut 48 wirkt üblicherweise als Dämpfungskanal, und zwar insbesondere, wenn ein mit Dämpfungseigenschaften versehener Überström-Kanal 17 nicht vorhanden ist.

Bei der Ausführungsform nach Fig. 5 weist der Kolben 6' nicht einen Kolben-Grundkörper 26 auf, der mittels eines Anschlags 28 befestigt ist. Anstelle dessen ist eine weitere Ringscheibe 49 vorgesehen, die in der geschilderten Weise in einer weiteren ringförmigen Nut 50 in der Kolbenstange 3' befestigt ist. Die Ringscheibe 49 hat in montiertem Zustand, also nach der Montage mittels Kaltverformung in der geschilderten Weise, einen Außendurchmesser m, der kleiner ist als der Innendurchmesser n des Gehäuses 1. Hierdurch wird zwischen der Ringscheibe 49 und der Innenwand 7 des Gehäuses 1 ein Spalt 51 geschaffen. Bei der Montage der Ringscheibe 49 wird in der ebenfalls bereits geschilderten Weise eine Radialnut 48' in die Ringscheibe 49 eingeformt. Nach der Montage der Ringscheibe 49 wird ein Kolbenring 33' auf die Kolbenstange 3' aufgeschoben, der aus einem elastischen Material besteht. Als Werkstoff hierfür kommt beispielsweise Polytetrafluorethylen (PTFE) in Betracht.

Im Anschluß daran wird in die Nut 34 eine Ringscheibe 32' eingeformt, die im vorliegenden Fall einen innerhalb des Kolbenrings 33' liegenden Durchlaßkanal 52 aufweist. Der Außendurchmesser D der Ringscheibe 32' ist nach der Montage durch Kaltverformung nur geringfügig kleiner als der Innendurchmesser n des Gehäuses 1, der ebenfalls dem Außendurchmesser des Kolbenrings 33 bzw. 33' entspricht. D ist nur einige Hundertstel oder einen Zehntel Millimeter kleiner als n. Dagegen ist der Außendurchmesser m der Ringscheibe 49 zumindest einige Zehntel Millimeter kleiner als der Außendurchmesser D der Ringscheibe 32'. Durch die geschilderten Verhältnisse kann die Ringscheibe 32' nach der Montage der Ringscheibe 49 und des Kolbenrings 33' in der breits geschilderten Weise durch Kaltverformung montiert werden. Der Kolbenring 33' wird beim Durchzug durch die Verformungs-Hülse 41 elastisch verformt und nimmt nach der Verformung wieder den Durchmesser D an. Bei der Montage der Ringscheibe 32' liegt gegen die Ringscheibe 32' nur ein dem Niederhalter 38 nach Fig. 3 entsprechendes Werkzeug an. Eine Verformungs-Hülse entsprechend der Verformungs-Hülse 41 in Fig. 3 wird entgegen der dortigen Ziehrichtung 43 über die Ringscheibe 32' gezogen und verformt diese in die Nut 34. Im übrigen ist es grundsätzlich auch möglich, den Kolbenring 33' unter elastischer Verformung nachträglich einzusetzen, also nach der Montage der Ringscheiben 49 und 32' unter elastischer Aufweitung über die Ringscheibe 49 zu schieben. Aufgrund seiner Elastizität formt er sich zurück.

Beim Einschub der Kolbenstange 3' liegt der Kolbenring 33' gegen die Ringscheibe 32' an, wie in Fig. 5 links angedeutet ist, so daß das Gas aus dem Gehäuseraum 18 durch den Spalt 51, den Kolbenring 33' und den Durchlaßkanal 52 in den Gehäuseraum 19 strömen kann. Das Einschieben der Kolbenstange erfolgt also weitgehend ungedämpft. Beim Ausfahren der Kolbenstange 3' aus dem Gehäuse 1 legt sich der Kolbenring 33' entsprechend der Darstellung in Fig. 5 rechts gegen die Ringscheibe 49, so daß der Spalt 51 im wesentlichen verschlossen ist. Es kann nur noch Gas aus dem Gehäuseraum 19 durch den Durchlaßkanal 52 in der Ringscheibe 32', den Kolbenring 33' und die als Drosselstelle wirkende Radialnut 48 zum Spalt 51 und von dort in den Gehäuseraum 18 strömen. Bei dieser Ausführungsform eines Kolbens 6' besteht die Bearbeitung der Kolbenstange 3' nur noch im Einstechen der Nuten 34 und 50. Bei dieser Ausführungsform bedarf es ebenfalls nicht zwingend der Radialnut 48, und zwar insbesondere dann nicht, wenn der in Fig. 1 dargestellte Überströmkanal 17 vorhanden ist, dessen Querschnitt so klein ist, daß er eine Drossel- d.h. Dämpfungs-Wirkung aufweist. Es sei ausdrücklich darauf hingewiesen, daß der Durchlaßkanal 52 bereits bei der Ringscheibe 32 vor ihrer Verformung vorhanden ist. Bei der Kaltverformung wird der Kanal in seinem Querschnitt verändert, worauf es aber nicht ankommt.

Wenn der Kolben 6 bzw. 6' für andere Zwecke als die geschilderten eingesetzt werden soll, dann können die durch Kaltverformung angeformten Scheiben auch andere Außenquerschnitte und andere Innenquerschnitte aufweisen. Durch von einem Kreisquerschnitt abweichende Verformungen des Außenumfangs der Ringscheiben 32 können auch hiervon abweichende Verformungen im Innenbereich erzielt werden.

Die geschilderte Kolbenstange 3 bzw. 3' mit Kolben 6 bzw. 6' kann selbstverständlich auch bei entsprechender Ausgestaltung für einen hydraulischen oder pneumatischen oder hydropneumatischen Dämpfer eingesetzt werden.

## Patentansprüche

1. Verfahren zum Anbringen einer Ringscheibe (32') an einer Kolbenstange (3, 3'),
dadurch gekennzeichnet,
daß eine Kolbenstange (3, 3') mit einer Vertiefung versehen wird, daß eine Ringscheibe (32', 49) über die Kolbenstange (3, 3') vor die Vertiefung geschoben wird,
und daß die Ringscheibe (32', 49) mit im wesentlichen radial zur Mittel-Längs-Achse (2) der Kolbenstange (3, 3')) gerichteten Kräften beaufschlagt und dadurch unter Gestaltung ihrer Außenform in die Vertiefung hinein verformt wird.

2. Verfahren nach Anspruch 1, dadurch gekennzeichnet, daß die Kolbenstange (3, 3') mit einer Nut (34, 50) versehen wird.

3. Verfahren nach Anspruch 1 oder 2, dadurch gekennzeichnet, daß die Dicke (f) der Ringscheibe (32', 49) während der radialen Verformung im wesentlichen unverändert bleibt.

4. Verfahren nach einem der Ansprüche 1 bis 3, dadurch gekennzeichnet, daß während des Verformungsvorganges mindestens eine Stirnfläche (47) der Ringscheibe (32', 49) mit mindestens einer Radialnut (48, 48') versehen wird.

5. Verfahren nach einem der Ansprüche 1 bis 4, dadurch gekennzeichnet, daß die im wesentlichen radialen Kräfte über den Umfang der Ringscheibe (32', 49) im wesentlichen gleich verteilt sind.

6. Verfahren nach einem der Ansprüche 1 bis 5, dadurch gekennzeichnet, daß die Verformung der Ringscheibe (32') durch Kaltverformung, insbesondere durch Fließpressen, erfolgt.

7. Verfahren nach einem der Ansprüche 1 bis 6, dadurch gekennzeichnet, daß zur Bildung eines Kolbens (6')
die Kolbenstange (3') mit zwei voneinander beabstandeteten Vertiefungen versehen wird,
eine Ringscheibe (49) über die Kolbenstange (3') vor die Vertiefung geschoben wird,
die Ringscheibe (49) in die Vertiefung hineinverformt wird,
ein Kolbenring (33') auf die Kolbenstange (3') bis vor die Ringscheibe (49) geschoben wird,
eine weitere Ringscheibe (32') über die Kolbenstange (3') vor eine weitere Vertiefung geschoben wird und die weitere Ringscheibe (32') in die weitere Vertiefung hineinverformt wird.

8. Werkzeug zur Durchführung des Verfahrens nach einem der Ansprüche 1 bis 7, gekennzeichnet durch
einen Gegenhalter (36, 36') mit einer Aufnahme (35) für einen Endbereich (27) der Kolbenstange (3) und mit einer Stirnseite (37) zur Abstützung der Ringscheibe (32'),
durch einen Niederhalter (38) mit einer die Kolbenstange (3) aufnehmenden Bohrung (40) und mit einer Stirnseite (39) zur Anlage gegen die Ringscheibe (32'),
und durch eine über den Niederhalter (38), die Ringscheibe (32') und den Gegenhalter (36, 36') verschiebbare Verformungs-Hülse (41) mit einem sich verjüngenden, die Ringscheibe (32') radial nach innen drückenden Verformungs-Abschnitt (42).

9. Werkzeug nach Anspruch 8, dadurch gekennzeichnet, daß der größte Innenquerschnitt des Verformungs-Abschnitts (42) der Verformungs-Hülse (41) größer als der Außenquerschnitt der unverformten Ringscheibe (32') ist und daß der Verformungs-Abschnitt (42) einen kleinsten Innenquerschnitt aufweist, der gleich dem Außenquerschnitt der verformten Ringscheibe (32) ist.

10. Werkzeug nach Anspruch 8 oder 9, dadurch gekennzeichnet, daß der Gegenhalter (36, 36') und der Niederhalter (38) einen identischen Außenquerschnitt aufweisen und daß der Verformungs-Abschnitt (42) der Verformungs-Hülse (41) einen engsten Querschnitt aufweist, der angenähert identisch dem Außenquerschnitt des Gegenhalters (36, 36') und des Niederhalters (38) ist.

11. Werkzeug nach einem der Ansprüche 8 bis 10, dadurch gekennzeichnet, daß sich an den Verformungs-Abschnitt (42) ein Glätt-Abschnitt (44) mit über seiner Länge zumindest im wesentlichen identischem Querschnitt anschließt.
